# EUROPEAN PATENT APPLICATION

(11) **EP 4 650 992 A1**
(43) Date of publication of application: **19.11.2025**
(21) Application number: 25176127.6
(22) Date of filing: 13.05.2025
(51) Int. Cl.: G06F 21/31, G06F 21/36, H04L 9/40, G06F 21/44

(54) **GRAPHICAL USER AUTHENTICATION FOR EDGE DEVICES**

(30) Priority: 17.05.2024 US 202418667536
(71) Applicant: Schneider Electric Systems USA, Inc., Foxborough, MA 02035 (US)
(72) Inventor: REDMOND, James, Richmond, K0A 2Z0 (CA); SOBIN, Zackery, Tryon, NC, 28782 (US)
(74) Representative: Manitz Finsterwald Patent- und Rechtsanwaltspartnerschaft mbB

(57) **Abstract**

An authentication system for an industrial plant is configured for authenticating a user device to either permit or deny the user device access to an industrial edge device. The authentication system broadly comprises the industrial edge device, the user device, and the authentication processor. The industrial edge device is configured for at least one of monitoring and controlling an operation within the industrial plant. The user device is configured to communicate with the industrial edge device to request access to the industrial edge device. The authentication processor is associated with the industrial edge device, and the authentication processor is configured to communicate a graphical authentication task to the user device in response to the request for access. The authentication processor is further configured to verify a response to the graphical authentication task from the user device for determining whether to grant the user device access to the industrial edge device.

## Description

### FIELD

The present disclosure generally relates to multi-factor authentication of industrial edge devices and more particularly to graphical user authentication.

### BACKGROUND

Industrial plants are increasingly using the Internet of Things (IoT) to optimize production processes. The IoT within industrial plants generally includes interconnected smart devices such as processors and sensors configured to collect, transmit, process, and respond to data obtained from the industrial plants. One example of smart devices used in industrial plants includes industrial edge devices. Industrial edge devices are generally preferred smart devices, as they are compatibly configured for ease of connection with other devices in an industrial plant. With their increased importance in industrial plants, smart devices have become significant targets for malicious hackers.

### SUMMARY

Aspects of the present disclosure permit an improved framework for graphically authenticating user devices to provide the user devices access to industrial edge devices within an industrial plant.

In one aspect, an authentication system for an industrial plant comprises an industrial edge device configured for at least one of monitoring and controlling an operation within the industrial plant. A user device is configured to communicate with the industrial edge device to request access to the industrial edge device. An authentication processor is associated with the industrial edge device. The authentication processor is configured to communicate a graphical authentication task to the user device in response to the request for access. The authentication processor is further configured to verify a response to the graphical authentication task from the user device for determining whether to grant the user device access to the industrial edge device.

In another aspect, a method for enabling secure access to an industrial edge device of an industrial plant comprises establishing communication between the industrial edge device and a user device. A request to the industrial edge device is transmitted by the user device, to access the industrial edge device. The industrial edge device receives the request. In response to the request, an authentication processor associated with the industrial edge device, transmits a graphical authentication task to the user device for the user device to execute to provide as a response thereto. The authentication processor verifies the response provided by the user device to determine whether to grant the user device access to the industrial edge device.

Other objects and features will be in part apparent and in part pointed out hereinafter.

### BRIEF DESCRIPTION OF THE DRAWINGS

FIG. 1 is a schematic illustration of an authentication system for an industrial plant, according to an embodiment.
FIG. 2 is a schematic illustration of a graphical authentication task, according to an embodiment.
FIG. 3 is a schematic illustration of another graphical authentication task, according to an embodiment.
FIG. 4 is a schematic illustration of a credentials-based authentication task, according to an embodiment.
FIG. 5 is a flow chart of an exemplary method for enabling secure access to an industrial edge device of an industrial plant, according to an embodiment.

Corresponding reference characters indicate corresponding parts throughout the drawings.

### DETAILED DESCRIPTION

The present disclosure generally relates to an authentication system for an industrial plant. The authentication system of the present disclosure provides a multi-factor authentication of user devices to either permit or deny the user devices access to industrial edge devices within an industrial plant. Accordingly, at least one of the factors includes a graphical authentication task for authenticating the user device. As will be explained in greater detail below, authentication systems and methods in accordance with the present disclosure provide an improved solution for preventing unauthorized user devices from interfering with critical devices such as industrial edge devices in an industrial plant.

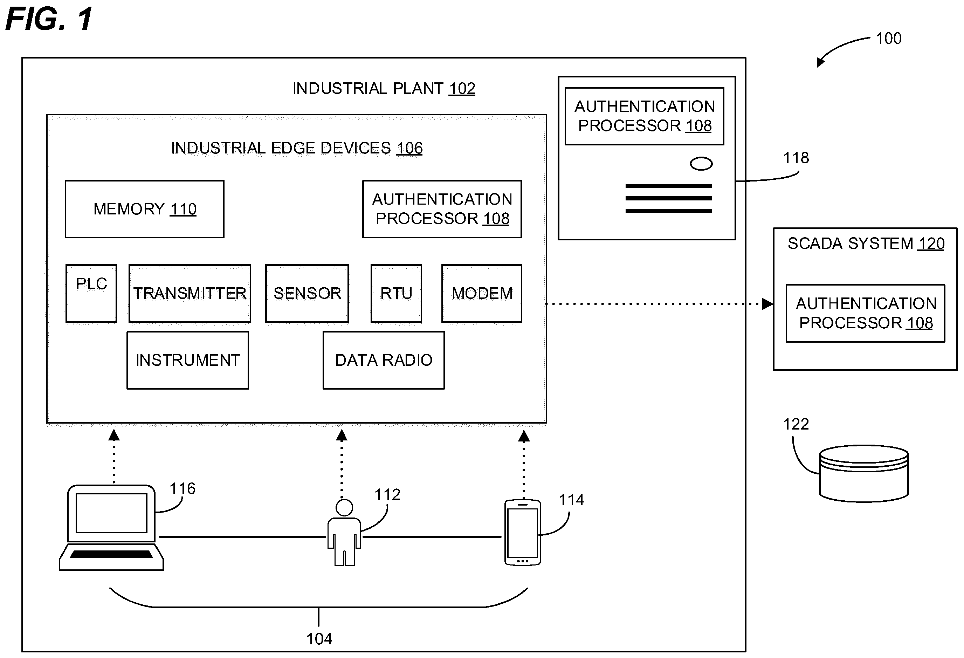

Referring now to FIG. 1, an authentication system in accordance with the present disclosure is generally indicated at reference number 100. The authentication system 100 authenticates devices within an industrial plant 102. Broadly the authentication system 100 comprises a user device 104, an industrial edge device 106, and an authentication processor 108. The user device 104 communicates with the industrial edge device 106 to request access to the industrial edge device (e.g., to view, transmit, control, etc., data and operating parameters of the industrial edge device). The authentication processor 108 is associated with the industrial edge device 106, and communicates one or more authentication tasks such as a graphical authentication task to the user device 104 in response to the request for access. The authentication processor 108 is then configured to verify one or more responses to the one or more authentication tasks from the user device 104 for determining whether to grant or deny the user device access to the industrial edge device 106. Individual components of the authentication system 100 will now be described before turning to an exemplary method for authenticating a user device 104 to enable secure access to an industrial edge device 106 of the industrial plant 102.

The industrial edge device 106 is configured for at least one of monitoring and controlling an operation within the industrial plant 102. For example, the industrial edge device 106 comprises one of a programmable logic controller (PLC), transmitter, sensor, remote terminal unit (RTU), instrument, data radio, and modem. In an exemplary embodiment, the industrial edge device 106 comprises a memory 110 configured for storing at least one of data regarding operations in the industrial plant 102, operating parameters for the industrial edge device, predetermined model response data used for authenticating the user device 104, and processor-executable instructions for executing an authentication method. In another embodiment, the industrial edge device 106 further comprises the authentication processor 108. Furthermore, the industrial edge device 106 may include user inputs, a display, circuit boards and/or other electronic components for communicating with other devices of the authentication system 100, and other related elements.

Broadly, the user device 104 comprises a device utilized by a user 112 such as an employee of the industrial plant 102. User device examples embodying user devices 104 used to indirectly access the industrial edge device 106 will now be described. In one example, the user device 104 comprises a personal device 114, such as a smartphone associated with the user 112. In another example, the user device 104 comprises a shared device 116 that multiple users have access to, such as a kiosk or workstation. It is also contemplated that the user 112 may perform the authentication tasks directly at the industrial edge device 106, to directly access the industrial edge device, in which case the industrial edge device comprises user device 104. Generally, the user device 104 is configured to communicate with the industrial edge device 106 to request access to the industrial edge device. For example, the user device 104 is configured to communicate with the industrial edge device 106 using a communication protocol such as a Transmission Control Protocol/Internet Protocol (TCP/IP) such as a Secure Shell (SSH) protocol. In another example, the user device 104 is configured to communicate with the industrial edge device 106 using a communication protocol such as a User Datagram Protocol (UDP). However, it will be apparent to one of ordinary skill in the art that other communication protocols may be used without departing from the scope of the present disclosure. In an exemplary embodiment, the user device 104 comprises a memory, user inputs, a display, circuit boards and/or other electronic components for communicating with other devices of the authentication system 100, and other related elements.

It is envisioned that in different embodiments, the authentication processor 108 may be integrated on different devices associated with the industrial plant 102. For example, the authentication processor 108 may be integrated on one of a separate device on a central server 118 of the industrial plant 102, the industrial edge device 106, a Supervisory Control and Data Acquisition (SCADA) system 210 of the industrial plant, and on the shared device 116 of the industrial plant. In any of those instances, the devices may include a memory, user inputs, a display, circuit boards and/or other electronic components for communicating with other devices of the authentication system 100, and other related elements. Moreover, the authentication processor 108 is configured to execute processor executable instructions to authenticate the user device 104, as will be explained in greater detail below. The processor executable instructions may be stored in a memory of the device with the authentication processor thereon, or stored in an external database 122.

The authentication processor 108 is configured to execute the processor executable instructions to authenticate the user device 104. Broadly, the authentication processor 108 is associated with the industrial edge device 106 and configured to communicate one or more authentication tasks such as graphical authentication tasks and additional authentication tasks to the user device 104 in response to the request for access from the user device to the industrial edge device. In one embodiment, the authentication processor 108 executes the processor-executable instructions to generate the authentication tasks. In another embodiment, the authentication processor 108 obtains the authentication tasks from other devices associated with the industrial plant (e.g., from the SCADA system 120).

The authentication processor 108 is configured to verify one or more responses to the one or more authentication tasks from the user device 104 for determining whether to grant or deny the user device access to the industrial edge device 106. It is also contemplated that in verification, the authentication processor 108 is configured to accept a certain range of responses to grant the user device 104 access to the industrial edge device 106 to accommodate for slight variation. In one example, verifying the response provided by the user device 104 to determine whether to grant the user device access to the industrial edge device 106 comprises comparing the response to a predetermined model response to detect a match (or a relatively close match that falls within the certain range of responses), such that if a match is detected the authentication processor 108 grants the user device access to the industrial edge device and if a match is not recognized the authentication processor denies the user device access to the industrial edge device. The predetermined model response and range associated therewith may be stored in a memory of the device with the authentication processor thereon, or stored in the external database 122.

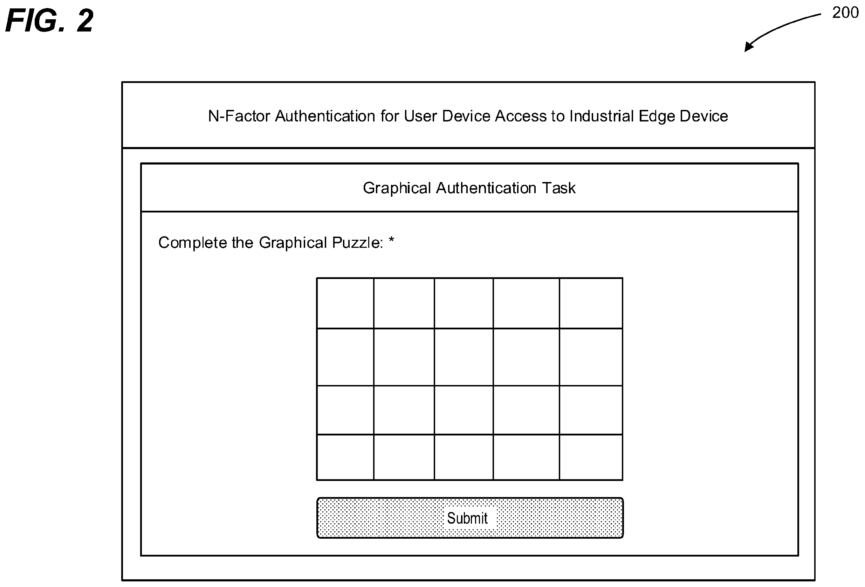

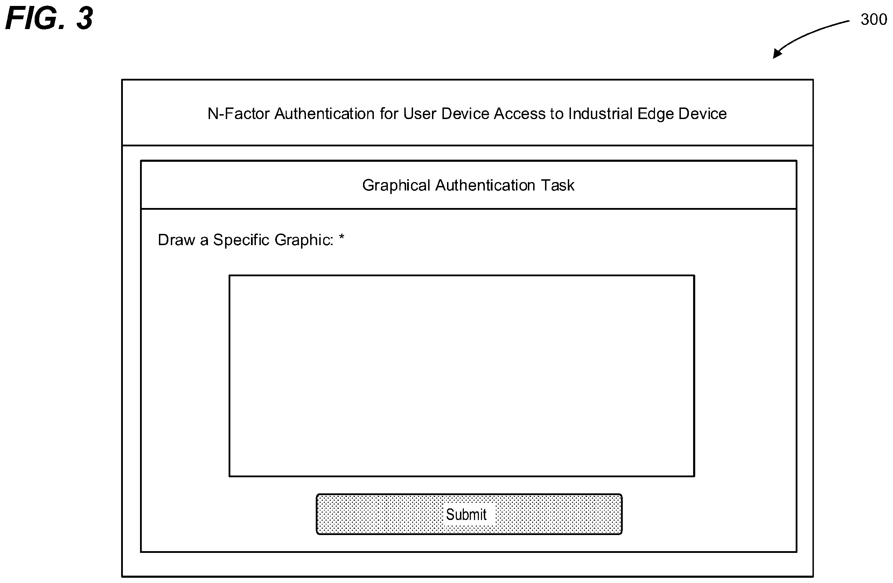

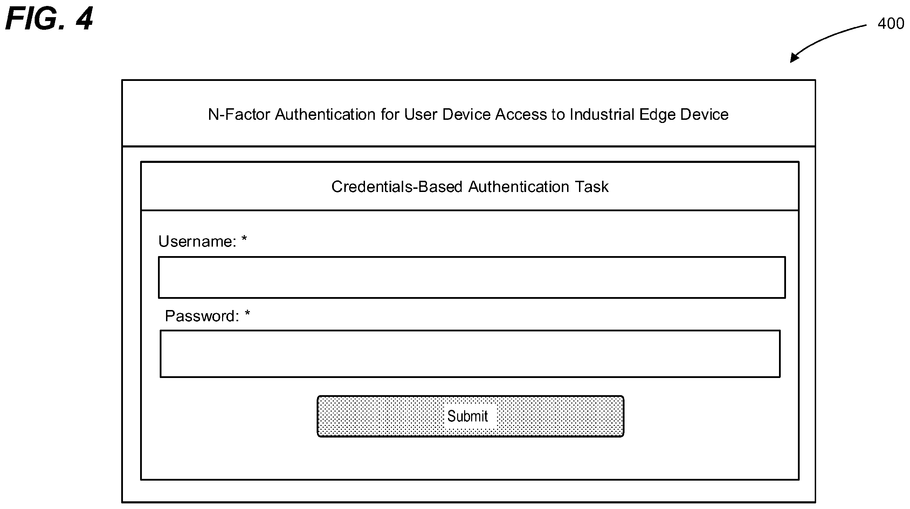

The authentication tasks comprise graphical authentication tasks and additional authentication tasks. The graphical authentication tasks comprise graphic-based tasks used to authenticate the user device 104. In an exemplary embodiment, graphical authentication tasks comprise at least one of a graphical puzzle task, a Completely Automated Public Turing test to tell Computers and Humans Apart (CAPTCHA) task, and a drawing task. FIG. 2 illustrates a graphical puzzle task 200 provided to the user device 104, wherein the user 112 must complete the graphical puzzle to authenticate the user device. For example, the graphical puzzle may be an image-based test, such as selecting all images with traffic lights or recognizing obscured alphanumeric characters. FIG. 3 illustrates a drawing task 300 provided to the user device 104, wherein the user 112 must draw a graphic specified by the drawing task to authenticate the user device. In other embodiments, such as the CAPTCHA task, the graphical authentication task comprises at least one of static and video images. The additional authentication tasks comprise other types of authentication tasks such as credentials-based authentication tasks and sound-based authentication tasks. FIG. 4 illustrates a credentials-based task 400 provided to the user device 104, wherein the user 112 must enter credentials specified by the credentials-based task to authenticate the user device.

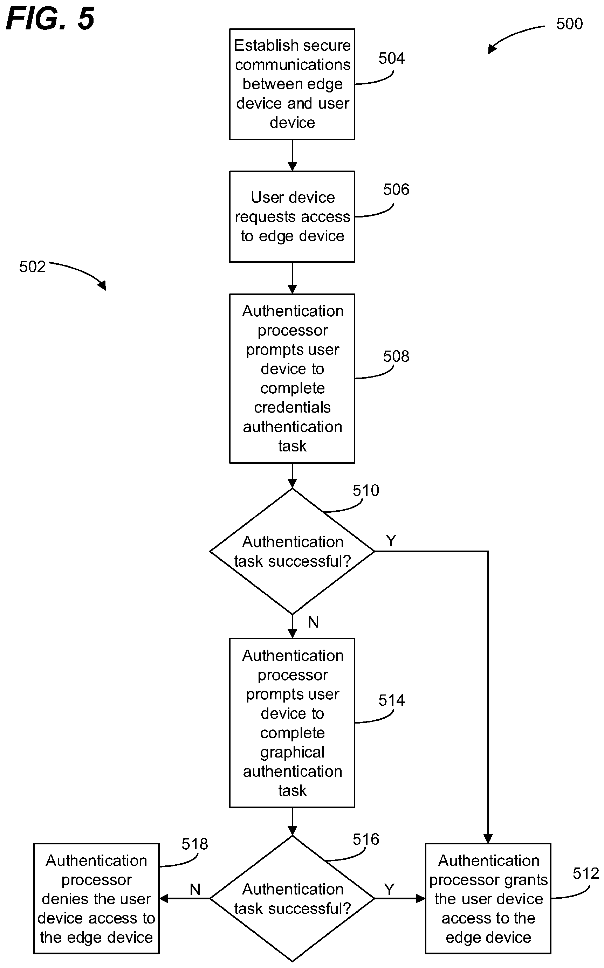

A method for enabling secure access to the industrial edge device 106 of the industrial plant 102 will now be described. FIG. 5, illustrates a multi-factor embodiment 500 of the method, wherein there are two authentication tasks presented to the user device 104, however it will be apparent to a person of ordinary skill in the art that the method may comprise N-authentication tasks. A portion of the method generally referred to as the authentication method 502 comprises steps executable by the authentication processor 108. In one embodiment, the authentication processor 108 executes processor executable instructions to execute the authentication method 502.

Initially to request access to the industrial edge device 106 (e.g., to view, transmit, control, etc., data and operating parameters of the industrial edge device), a user 112 such as a plant employee, utilizes the user device 104 to establish communication with the industrial edge device (step 504). From here, the user 112 transmits a request to the industrial edge device 106 from the user device 104 to access the industrial edge device (step 506). For example, the user 112 sends the request from a workstation 116 in the industrial plant 102, or from their smartphone 114. Once the industrial edge device 106 receives the request, the authentication processor 108 associated with the industrial edge device 106, obtains an authentication task (such as the graphical authentication task or additional authentication task) and transmits an authentication task to the user device 104 to execute to provide as a response thereto (step 508). In one embodiment, the authentication processor 108 executes processor executable instructions to generate the authentication task. In another embodiment, the authentication processor 108 obtains the authentication task from another device associated with the industrial plant 102 such as the SCADA system 120.

Next at step 510, the authentication processor 108 verifies the response provided by the user device 104. For example, the authentication processor 108 compares the response to a predetermined model response to detect a match (or a relatively close match that falls within a certain range of responses). If a match or relatively close match is detected, the authentication task performed at step 508 is deemed successful and the authentication processor 108 either grants the user device 104 access to the industrial edge device 106 (step 512), or sends another authentication task. If no match or relatively close match is detected, the authentication task performed at step 508 is deemed unsuccessful and the authentication processor 108 either denies the user device 104 access to the industrial edge device 106 or sends another authentication task (step 514).

At step 516, the authentication processor 108 verifies the response provided by the user device 104 to the authentication task of step 514. If the authentication task performed at step 514 is deemed successful, the authentication processor 108 grants the user device 104 access to the industrial edge device 106. If the authentication task performed at step 514 is deemed unsuccessful, the authentication processor 108 denies the user device 104 access to the industrial edge device 106 (step 518). In other embodiments, additional authentication tasks may be provided before authenticating the user device 104. Moreover, in an optional step, at least one of the authentication processor 108 and industrial edge device 106 are configured to transmit an alert to other devices associated with the industrial plant 102 such as the SCADA system 120 in response to the authentication processor denying the user device 104 access to the industrial edge device.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. An authentication system for an industrial plant, the authentication system comprising:
an industrial edge device configured for at least one of monitoring and controlling an operation within the industrial plant;
a user device configured to communicate with the industrial edge device to request access to the industrial edge device; and
an authentication processor associated with the industrial edge device, the authentication processor configured to communicate a graphical authentication task to the user device in response to the request for access, the authentication processor further configured to verify a response to the graphical authentication task from the user device for determining whether to grant the user device access to the industrial edge device,
wherein the industrial edge device in particular comprises one of a remote terminal unit (RTU), programmable logic controller (PLC), programmable automation controller (PAC), sensor, instrument, data radio, and modem, and/or
wherein the user device comprises a personal device or a shared device.

2. The authentication system of claim 1, wherein the user device communicates with the industrial edge device using a Transmission Control Protocol/Internet (TCP/IP) protocol.

3. The authentication system of claim 1 or 2, wherein the user device communicates with the industrial edge device using a User Datagram Protocol (UDP).

4. The authentication system of any one of the preceding claims, wherein the graphical authentication task comprises at least one of a graphical puzzle task, a Completely Automated Public Turing test to tell Computers and Humans Apart (CAPTCHA) task, and a drawing task,
wherein the graphical authentication task in particular comprises at least one of a static image and video image.

5. The authentication system of any one of the preceding claims, wherein the authentication processor is further configured to communicate one or more additional authentication tasks to the user device in response to the request for access and to verify an additional response to the one or more additional authentication tasks for determining whether to grant the user device access to the industrial edge device.

6. The authentication system of claim 5, wherein at least one of the one or more additional authentication tasks comprises a credentials-based authentication task.

7. The authentication system of any one of the preceding claims, wherein the authentication processor is configured to execute processor-executable instructions to generate the graphical authentication task.

8. The authentication system of any one of the preceding claims, wherein the authentication processor comprises a Supervisory Control and Data Acquisition (SCADA) system of the industrial plant configured to generate the graphical authentication task.

9. A method for enabling secure access to an industrial edge device of an industrial plant, the method comprising:
establishing communication between the industrial edge device and a user device;
transmitting, by the user device, a request to the industrial edge device, to access the industrial edge device;
receiving, at the industrial edge device, the request;
in response to the request, transmitting, by an authentication processor associated with the industrial edge device, a graphical authentication task to the user device for the user device to execute to provide as a response thereto;
verifying, by the authentication processor, the response provided by the user device to determine whether to grant the user device access to the industrial edge device,
wherein the graphical authentication task in particular comprises at least one of a graphical puzzle task, a Completely Automated Public Turing test to tell Computers and Humans Apart (CAPTCHA) task, and a drawing task.

10. The method of claim 9, further comprising transmitting, by the authentication processor, one or more additional authentication tasks to the user device for the user device to execute to provide as an additional response thereto.

11. The method of claim 10, further comprising verifying, by the authentication processor, the additional response to determine whether to grant the user device access to the industrial edge device or to transmit at least one of another additional authentication task and another graphical authentication task.

12. The method of claim 10, wherein at least one of the additional authentication tasks comprises a credentials-based authentication task.

13. The method of any one of claims 9 - 12, further comprising executing, by the authentication processor, processor-executable instructions to generate the graphical authentication task,
wherein said authentication processor in particular comprises a Supervisory Control and Data Acquisition (SCADA) system.

14. The method of any one of claims 9 - 13, wherein said verifying, by the authentication processor, the response provided by the user device to determine whether to grant the user device access to the industrial edge device comprises comparing the response to a predetermined model response to detect a match, such that if a match is detected the authentication processor grants the user device access to the industrial edge device and if a match is not recognized the authentication processor denies the user device access to the industrial edge device.

15. The method of claim 14, further comprising transmitting, at the authentication processor, an alert to a Supervisory Control and Data Acquisition (SCADA) system of the industrial plant in response to the authentication processor denying the user device access to the industrial edge device.
